# EUROPÄISCHE PATENTANMELDUNG

(11) **EP 0 657 732 A1**
(43) Veröffentlichungstag der Anmeldung: **14.06.1995**
(21) Anmeldenummer: 94116211.7
(22) Anmeldetag: 14.10.1994
(51) Int. Cl.: G01N 21/90

(54) **Verfahren und Vorrichtung zur optischen Prüfung eines durchsichtigen Behälterbereichs, insbesondere des Mündungsbereichs**

(30) Priorität: 06.12.1993 CH 3675/93; 25.08.1994 CH 2602/94
(71) Anmelder: ELPATRONIC AG, CH-6303 Zug (CH)
(72) Erfinder: Buchmann, Christ, CH-8903 Birmensdorf (CH); Burri, Karl-Georg, CH-8942 Oberrieden (CH)

(57) **Zusammenfassung**

Zur Aufnahme eines Bildes des Mündungsbereichs (2) einer Flasche (1) wird unterhalb des aufzunehmenden Mündungsbereichs eine Leuchtfläche (3) angeordnet. Die Leuchtfläche (3) wird mittels einer Beleuchtungseinrichtung (4) beleuchtet und das Bild des beleuchteten Mündungsbereichs (2) wird durch eine Spiegelanordnung (5,6,11) auf eine Kamera gegeben. Durch die Leuchtfläche ist es möglich, den Mündungsbereich im Durchlicht abzubilden, was eine verbesserte Erkennbarkeit von Defekten und Verschmutzungen im Mündungsbereich ergibt und damit eine erleichterte Auswertung des von der Kamera aufgenommenen Bildes.

## Beschreibung

Die Erfindung betrifft Verfahren zur optischen Prüfung eines durchsichtigen Bereiches von Behältern, insbesondere des Mündungsbereiches von Flaschen, bei welchen eine von mindestens einer Kamera betrachtbare Abbildung des Bereiches erzeugt wird. Ferner betrifft die Erfindung Vorrichtungen zur Durchführung der Verfahren.

Aus dem Dokument EP-A-47936 ist ein Verfahren und eine Anordnung zur optischen Prüfung eines rotationssymmetrischen Körpers bekannt, wobei insbesondere Flaschenmündungen mit einem Gewinde geprüft werden. Aus dem Dokument EP-B-209 077 ist eine weitere Vorrichtung zur Prüfung des Mündungsbereichs von Flaschen bekannt, welche Nachteile der Vorrichtung gemäss dem erstgenannten Dokument beheben soll. Indes ist bei beiden gezeigten Vorrichtungen nachteilig, dass der Flaschenmündungsbereich mit Auflicht beleuchtet wird, was eine Prüfung des sich schlussendlich bei der Kamera ergebenden Bildes schwierig macht, da sich nur relativ geringe Helligkeitsunterschiede zwischen sauberen, unbeschädigten Flaschen einerseits und verschmutzten und/oder beschädigten Flaschen andererseits ergeben. Dies ist insbesondere ein Problem bei solchen Flaschen, deren Gewinde mit senkrecht stehenden Nuten (vent-slots) versehen sind. Dies trifft z.B. auf Mehrweg-PET-Flaschen zu.

Es stellt sich daher die Aufgabe, ein verbessertes Verfahren und eine verbesserte Vorrichtung zu schaffen, welche die genannten Nachteile nicht aufweist und welche ein leichter auswertbares Bild des zu prüfenden Flaschenbereichs erzeugt, mittels welchem Verschmutzungen und Beschädigungen sicher und rasch erkannt werden können.

Diese Aufgabe wird bei dem eingangs genannten Verfahren dadurch gelöst, dass mindestens eine im wesentlichen homogene Leuchtfläche unterhalb des zu prüfenden Mündungsbereiches angeordnet wird, um den Mündungsbereich im Durchlicht zu betrachten.

Bei der eingangs genannten Vorrichtung wird die Aufgabe gelöst durch eine Beleuchtungseinrichtung, einer von dieser beleuchteten Reflexionsfläche, die als im wesentlichen homogene Leuchtfläche unterhalb des zu prüfenden Bereiches angeordnet ist, und eine Spiegelanordnung, mittels welcher der Bereich durch eine Kamera betrachtbar ist.

Bei der Lösung gemäss der Erfindung wird durch eine homogene Leuchtfläche unterhalb des zu prüfenden Bereichs eine Durchlichtbeleuchtung des zu prüfenden Bereichs bewirkt. Die Beleuchtung im Durchlicht bewirkt, dass fehlerfreie Flaschen und insbesondere saubere vent-slots im Bild hell erscheinen. Verschmutzungen sind hingegen als dunkle Stellen gut sichtbar. Dadurch ergibt sich eine deutlich verbesserte Auswertbarkeit des von der Kamera erfassten Bildes und somit eine verbesserte, insbesondere auch raschere Prüfung des Behälters.

Es stellt sich ferner sowohl zusätzlich wie unabhängig von der bereits genannten Aufgabe die weitere Aufgabe, das Bild der Flaschenmündung derart zu der Kamera oder einer sonstigen lichtempfindlichen Anordnung zu bringen, dass die gesamte Mündung gut erkennbar ist. Diese Aufgabe wird durch ein Verfahren mit den Merkmalen des Anspruchs 22 oder 26 oder 29 und mit den Vorrichtungen zur Durchführung dieser Verfahren gelöst.

Im folgenden werden Ausführungsbeispiele der Erfindung anhand der Zeichnungen näher erläutert. Dabei zeigt
Figur 1 schematisch in teilweise geschnittener Seitenansicht eine erste Ausführungsform der Erfindung;
Figur 2 ebenfalls in schematischer Form eine Ausführung der Spiegelanordnung;
Figur 3 in ebenfalls schematischer Form eine weitere Ausbildung der Spiegelanordnung;
Figur 4 wiederum in teilweise geschnittener Seitenansicht eine weitere Ausführungsform der Erfindung;
Figur 5 eine Ausgestaltung der Beleuchtungseinrichtung;
Figur 6 eine weitere Ausgestaltung der Beleuchtungseinrichtung;
Figur 7 eine schematische Darstellung einer weiteren Ausführungsform der Erfindung mit Parabolspiegeln;
Figur 8 ebenfalls eine Ausführungsform der Erfindung mit Parabolspiegeln;
Figur 9 in schematischer Form eine Einrichtung zur Anordnung der Leuchtfläche an einem Behälter;
Figur 10 schematisch eine Anordnung zur Durchführung des Verfahrens mit lichtleitenden Fasern anstelle der Spiegel,
Figur 11 eine Anordnung zur Abbildung der Flaschenmündung mittels eines den Strahlengang brechenden Körpers;
Figur 12 eine Anordnung gemäss Figur 11 mit einer Korrekturkrümmung des Körpers;
Figur 13 eine weitere Anordnung mit Korrektur;
Figur 14 eine weitere Anordnung mit Korrektur;
Figur 15 eine Anordnung zur Abbildung der Flaschenmündung mittels eines Prismas und einer Korrektureinrichtung;
Figur 16 eine andere Ausführungsform der Anordnung nach Figur 15;
Figur 17 eine Abbildungsanordnung mit einem einteiligen, gekrümmten Prisma;
Figur 18 eine weitere Anordnung gemäss Figur 17;
Figur 19 eine weitere Ausführungsform der Abbildung mittels Prisma;
Figur 20 eine weitere Ausführungsform der Abbildung mittels Prisma;
Figur 21 eine weitere Ausführung mit Prisma; und
Figur 22a - 22e Ausführungsformen gemäss Figur 21 ebenfalls mit Korrektur von Abbildungsfehlern.

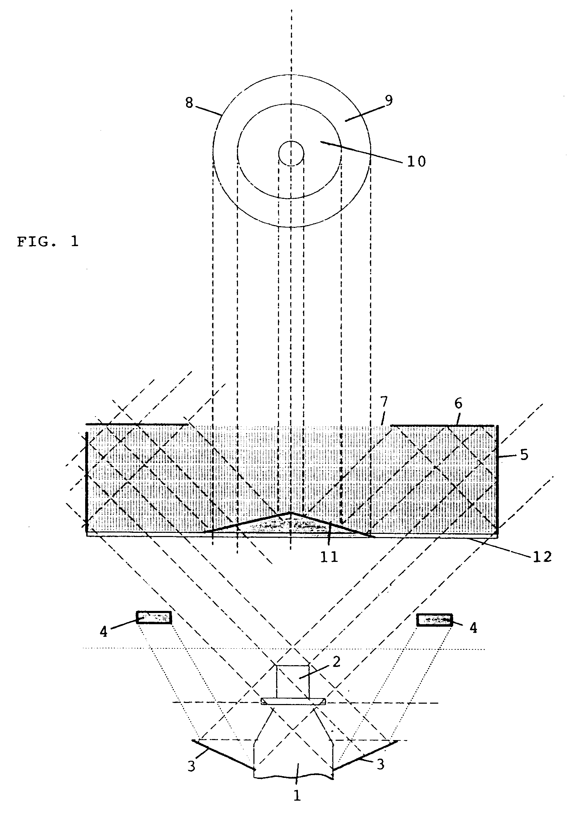

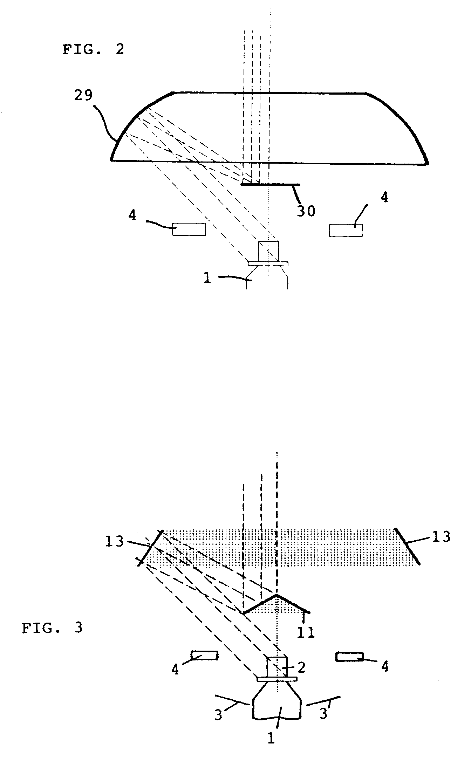

Figur 1 zeigt schematisch eine nur teilweise dargestellte Flasche 1 mit deren Mündungsbereich 2. Der Mündungsbereich 2 ist in der Regel mit einem (nicht dargestellten) Gewinde versehen. Im Gewinde können insbesondere senkrechte Nuten, sogenannte vent-slots, vorgesehen sein. Dies ist z.B. bei PET-Flaschen der Fall. Unterhalb des Mündungsbereiches des Behälters 1 ist eine um diesen umlaufende Leuchtfläche 3 vorgesehen. Im gezeigten Beispiel ist die Leuchtfläche 3 als Reflexionsfläche, z.B. als weisse Fläche ausgestaltet, welche von einer ringförmigen Beleuchtung 4 beleuchtet wird. Bei der ringförmigen Beleuchtung 4 kann es sich z.B. um eine Blitzlampe oder um eine gepulst betriebene Anordnung von Leuchtdioden handeln. Oberhalb des Behälters 1 ist eine Spiegelanordnung mit den Spiegeln 5, 6 und 11 vorgesehen, welche durch eine Glasscheibe 12 gegen den Behälter hin geschlossen ist und durch eine Oeffnung 7 gegen eine nicht dargestellte Kamera hin offen ist. In der Figur 1 ist oberhalb der Oeffnung 7 anstelle der Kamera und zur besseren Erläuterung der Erfindung das von der Kamera zu betrachtende Bild dargestellt. Die erwähnte Spiegelanordnung umfasst bei dem gezeigten Beispiel einen Zylinderspiegel 5 und einen an diesen Zylinderspiegel 5 anschliessenden ringförmigen Spiegel 6, der auch die genannte Oeffnung 7 bildet. Innerhalb des Zylinderspiegels 5 ist ein Kegelspiegel 11 mit spiegelnder Aussenseite angeordnet. In der Figur 1 ist der sich ergebende Strahlenverlauf, welcher zu dem oberhalb der Oeffnung 7 dargestellten Bild führt, durch gepunktete und gestrichelte Linien dargestellt. Es ergibt sich auf an sich bekannte Weise das oberhalb der Oeffnung dargestellte Bild 8, welches in Kreisringform einerseits die Aussenseite 10 des Gewindes darstellt und andererseits die Innenseite 9 des Gewindes. Es ergibt sich dadurch der bekannte Vorteil, dass sämtliche zur Inspektion benötigte Information in einem Bild enthalten ist und nur eine Kamera benötigt wird. Gemäss der Erfindung erfolgt nun aber gegenüber den bekannten Anordnungen die Beleuchtung des Behälters mittels der Leuchtfläche 3, die im gezeigten Beispiel als Reflexionsfläche ausgeführt ist, die aber auch eine selbstleuchtende Fläche sein kann. Die Beleuchtung mit der Leuchtfläche ergibt dabei im Gegensatz zu den bekannten Anordnungen eine Betrachtung des zu prüfenden Behälterbereiches im Durchlicht. Es ergibt sich dadurch insbesondere der grosse Vorteil, dass der Hintergrund hell ist und dass gute, saubere Flaschen und insbesondere saubere vent-slots im Bild hell erscheinen, Verschmutzungen hingegen als dunkle Stellen. Dies erlaubt gegenüber der bisherigen Betrachtung im Auflicht, bei der die Flasche vor dunklem oder unbestimmten Hintergrund gesehen wird, eine einfachere Auswertung des von der Kamera aufgenommenen Bildes. Die Anordnung mit drei Spiegeln ergibt gegenüber einem konischen Spiegel zusätzlich den Vorteil, dass Regionen, deren Betrachtung interessant ist (Innenseite) am Bildrand erscheinen. Dort ist bedingt durch die Geometrie konzentrischer Kreise die Auflösung höher als im Bildzentrum. Die Anzahl Pixel des Gesamtbildes kann deshalb kleiner gewählt werden.

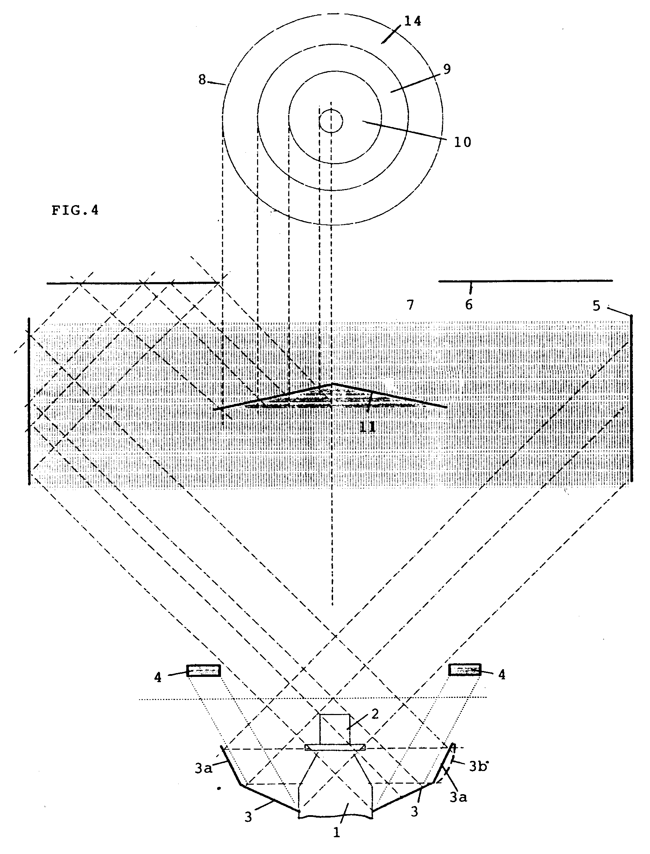

Figur 2 zeigt eine andere Ausführungsform der Spiegelanordnung. Bei dieser Ausführung ist ein gekrümmter Spiegel 29 oberhalb eines planen Spiegels 30 angeordnet. Der gekrümmte Spiegel kann dabei sphärisch oder parabolisch ausgestaltet sein. Der Behälter mit der Leuchtfläche 3 und der Beleuchtung 4 und der Strahlengang sind nur teilweise dargestellt.

Figur 3 zeigt eine weitere Ausführungsform der Spiegelanordnung, wobei hier ein kegelstumpfförmiger Spiegel 13 und der Kegelspiegel 11 vorgesehen sind. Mit den Spiegelanordnungen nach Figur 2 und Figur 3 kann dasselbe Resultat wie mit derjenigen von Figur 1 erzielt werden.

Figur 4 zeigt eine weitere Ausführungsform der Erfindung, wobei gleiche Bezugsziffern wie bisher verwendet gleiche Elemente bezeichnen. Bei der Ausführungsform von Figur 4 schliesst sich an die als Reflexionsfläche ausgebildete Leuchtfläche 3 eine weitere um den Behälter umlaufende Reflexionsfläche 3a an. Diese Reflexionsfläche 3a wird nicht direkt von der Beleuchtung 4 beleuchtet, sondern reflektiert Auflicht und Durchlicht (oder nur Durchlicht, wenn eine entsprechende Blende vorgesehen wird), welches vom Behälterteil unterhalb der Behältermündung reflektiert wird, bzw. Durchlicht von der weissen Fläche gegenüber (diffuses Licht) und Auflicht. Die Reflexionsfläche 3a ist z.B. als konischer Spiegel ausgeführt, wie in der Zeichnung als 3a dargestellt. Diese Ergänzung der Leuchtfläche durch eine anschliessende Reflexionsfläche erlaubt es in dem gezeigten Beispiel, den Bereich unterhalb der Mündung (haze area) ebenfalls im Bild 8 darzustellen. In dem oberhalb der Oeffnung 7 anstelle der Kamera zur besseren Erläuterung dargestellten Bild 8 ist dieser Bereich unterhalb der Mündung als Kreisring 14 ersichtlich. Auf diese Weise kann ein weniger kritischer Behälterbereich zusätzlich im Auflicht und Durchlicht oder nur im Durchlicht betrachtet werden. In dem Bereich 14 ist in der Regel weniger Bildauflösung notwendig als in den Gewindebereichen. Anstelle des konischen Spiegels 3a kann deshalb z.B. auch ein gekrümmter Spiegel vorgesehen werden, wie es in der rechten Hälfte der Figur 4 mittels des gekrümmten Verlaufes des Spiegels 3b angedeutet ist. Durch diese Spiegelausbildung ergibt sich ein schmalerer Ring 14. Der Spiegel 3a, 3b kann als halbdurchlässiger Spiegel ausgeführt sein, um die Helligkeitsverteilung im Bild 8 gleichmässiger zu gestalten. Es können auch nur mehrere Einzelspiegel vorgesehen sein, so dass der Haze-Bereich nur teilweise abgebildet wird.

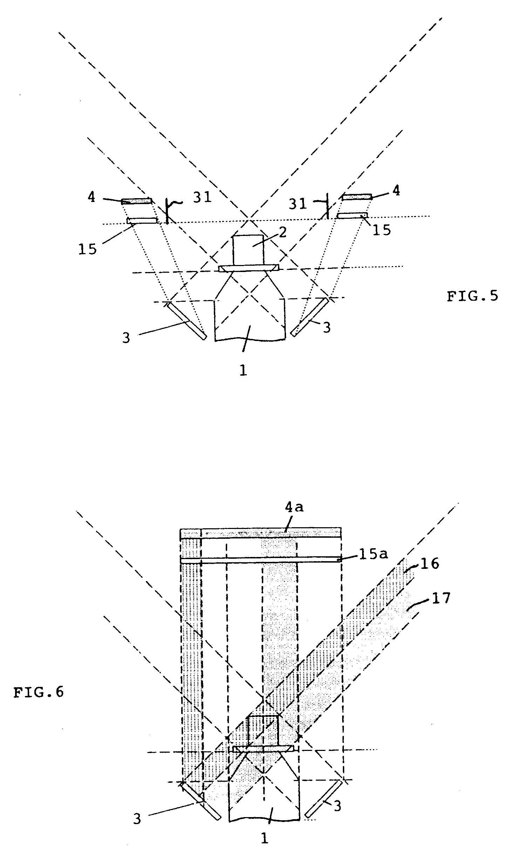

Figur 5 zeigt nur einen Teil der bisher jeweils dargestellten Anordnungen, d.h. in Figur 5 sind die Spiegel und das sich ergebende Bild, bzw. die Kamera nicht dargestellt. Die in Figur 5 gezeigte Anordnung kann aber mit jeder der bisher gezeigten Spiegelanordnungen kombiniert werden. In Figur 5 ist zusätzlich dargestellt, dass an der Beleuchtungseinrichtung 4, z.B. an der LED-Anordnung oder dem Blitz eine Streuscheibe 15 vorgesehen sein kann. In diesem Fall kann z.B. anstelle der als reflektierende weisse Fläche ausgestalteten Leuchtfläche 3 auch eine Spiegelfläche vorgesehen sein. Für eine homogene Lichtverteilung der Leuchtfläche 3 wird aber die erwähnte weisse Fläche bevorzugt. Auch hier kann anstelle der gezeigten Ausführung die Leuchtfläche 3 als selbstleuchtende Fläche ausgestaltet werden, welche z.B. von ringförmigen Blitzlampen oder ringförmigen LED-Anordnungen mit ebenfalls vorgeschalteter Streuscheibe gebildet sind. Zur Vermeidung von Reflexionen kann zusätzlich eine Blende 31 vorgesehen werden. Mit Blende erfolgt nur Durchlichtbetrachtung, ohne Blende Durchlicht- und Auflichtbetrachtung.

Figur 6 zeigt eine weitere Anordnung einer Beleuchtungseinrichtung und der Leuchtfläche 3. Dabei besteht die Beleuchtungseinrichtung aus einer kreisförmigen LED-Anordnung 4a oder einem Blitz mit einer Streuscheibe 15a. Diese kreisförmige Beleuchtung ist senkrecht oberhalb des Behälters angeordnet und beleuchtet die weisse Fläche 3. Bei dieser Anordnung ergibt sich eine kombinierte Betrachtung des Mündungsbereiches sowohl im Auflicht wie im Durchlicht. Es ist dies durch die Strahlenverläufe 16 und 17 dargestellt. Mit dem Strahlenverlauf 16 ergibt sich eine Beleuchtung der Innenseite des Gewindes im Durchlicht und mit dem Strahlenverlauf 17 eine Beleuchtung der Aussenseite des Gewindes im Auflicht und im Durchlicht. Die Spiegelanordnung ist in Figur 6 nicht dargestellt. Es können beliebige Spiegelanordnungen verwendet werden, welche die gezeigten Strahlen auf die bereits geschilderte Weise zur Kamera umlenken. Die gezeigte Leuchtdioden-Anordnung wird in dem dargestellten Beispiel induktiv gespiesen, da eine Speisung mittels Speisezuleitungen durch den Strahlengang führen würde.

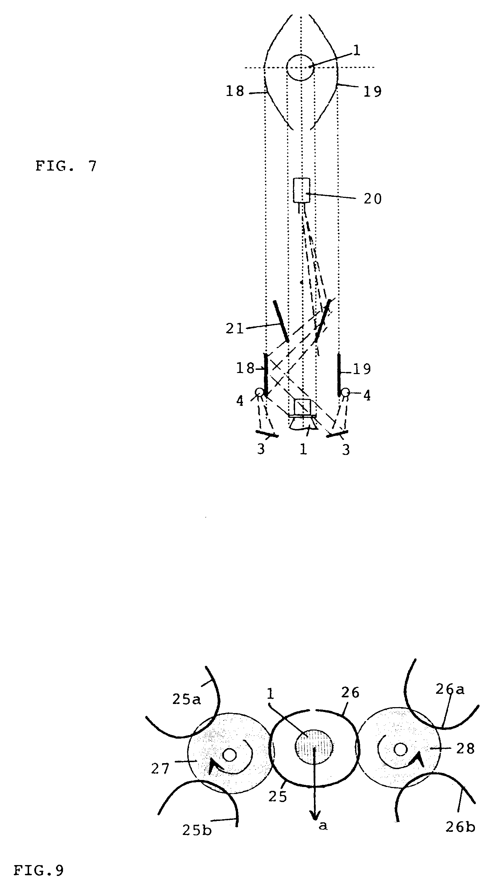

Figur 7 zeigt in ebenfalls schematischer und teilweise geschnittener Seitenansicht eine weitere Ausführungsform der Erfindung. Dabei ist wiederum in schematischer und teilweise geschnittener Seitenansicht der zu prüfende Behälter und die Leuchtfläche 3 mit der Beleuchtung 4 ersichtlich. Die Spiegelanordnung besteht bei dieser Ausführung aus zwei Parabolspiegeln 18,19, welche oberhalb der Kamera 20 zur Verdeutlichung ihrer Form in Draufsicht zusätzlich dargestellt sind. Nach den Parabolspiegeln 19 sind gerade Spiegel 21 angeordnet, welche die Strahlen von den Parabolspiegeln zur Kamera 20 hin umlenken, wie dies für den Strahlengang von der rechten Leuchtfläche 3 aus dargestellt ist. Es ergeben sich zwei Ansichten des Gewindes, welches von innen und aussen sichtbar ist. Durch parabolische Spiegel ergibt sich als Vorteil eine Streckung der Abbildung (der Kreis wird zum Rechteck). Dadurch wird eine Kamera mit weniger Bildpunkten benötigt. Das Bild kann ferner auch linear abgefahren werden.

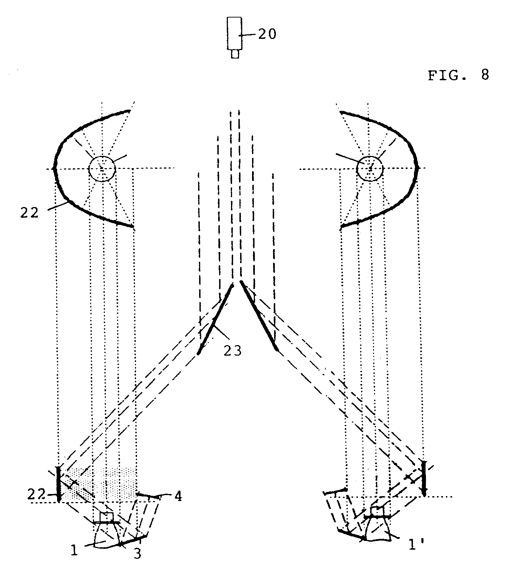

Figur 8 zeigt eine weitere Ausführungsform mit Parabolspiegel, wobei hier ein stark gekrümmter Parabolspiegel 22 vorgesehen ist, wie er in der Figur zusätzlich in Draufsicht dargestellt ist. Bei der Ausführungsform nach Figur 8 werden gleichzeitig zwei verschiedene Behälter 1, 1' geprüft und deren Mündungsbereich in einem Bild, das von der Kamera 20 erfasst wird, dargestellt. Dabei wird allerdings jeweils nicht der gesamte Mündungsbereich des Behälters 1 bzw. 1' in dem Bild dargestellt. Aus diesem Grund ist es bei dem gezeigten Beispiel erforderlich, dass der Behälter jeweils beide Prüfstationen durchläuft. Der Behälter 1 wird also zunächst in der im Bild links gezeigten Prüfstation betrachtet und das von ihm hervorgerufene Halbbild wird gespeichert oder direkt ausgewertet. Zu einem späteren Zeitpunkt befindet sich der Behälter 1 in der in der Zeichnung rechts dargestellten Prüfstation und der bisher erfasste Mündungsbereich wird in einem späteren Halbbild festgehalten. Zur Bildauswertung werden dann im Fall der Speicherung beide Halbbilder herangezogen, um einen Defekt und eine Verschmutzung der Flasche festzustellen. Bei der Lösung mit Parabolspiegeln können auch zwei oder mehr Kameras vorgesehen sein (Figur 8) und es können zwei oder mehr Parabolspiegel vorgesehen sein (Figur 7 und Figur 8).

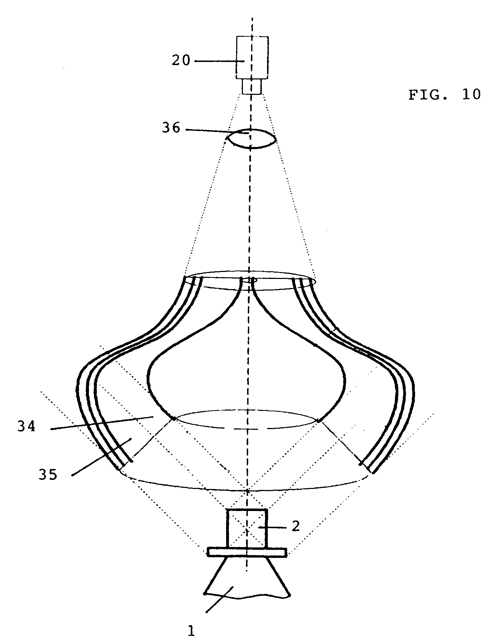

Figur 9 zeigt in stark schematischer Form in Draufsicht eine Möglichkeit, wie die Leuchtfläche 3 am Behälter angeordnet werden kann, wobei davon auszugehen ist, dass der Behälter sich auf einer Förderanlage bewegt, wie dies mit dem Pfeil a angedeutet ist. Die den Behälter umgebende Leuchtfläche wird dabei von zwei Leuchtflächenhälften 25,26 bzw. 25a und 26a bzw. 25b und 26b gebildet, welche an zwei sich drehenden Scheiben 27 und 28 befestigt sind. Die Scheiben 27 und 28 drehen dabei synchron und mit einer Geschwindigkeit, die der Fördergeschwindigkeit des Behälters 1 derart angepasst ist, dass sich jeweils beim Standpunkt der Kamera bzw. der Spiegelanordnung und Beleuchtung die beiden Leuchtflächenhälften zur Leuchtfläche zusammenfügen. Sobald dies geschehen ist erfolgt die kurzzeitige Beleuchtung mittels der Beleuchtungseinrichtung 4 und die Aufnahme durch die Kamera. Beim Weiterbewegen des Behälters 1 werden die beiden Hälften 25,26 der Leuchtfläche 3 wieder aus dem Pfad des Behälters weggeschwenkt. Der auf der Förderanlage folgende Behälter wird dann von den Hälften 25a und 26a umfasst, worauf wiederum die Beleuchtung und die Aufnahme und das Wegschwenken erfolgt. Der nächstfolgende Behälter wird dann von den Hälften 25b und 26b umfasst; der darauffolgende Behälter erneut von den Hälften 25 und 26 usw.

Figur 10 zeigt als Beispiel eine Ausführungsform, bei welcher die Spiegelanordnung durch eine Vielzahl von lichtleitenden Fasern ersetzt ist. In der Figur ist dies nur schematisch mit einigen Fasern dargestellt. Dabei können verschiedene Faserzahlen für verschiedene abzubildende Bereiche vorgesehen sein. Die Fasern können so angeordnet sein, wie in Figur 10 schematisch dargestellt, wo die das Licht von der Flasche 1 her aufnehmenden Fasern mit ihren Stirnflächen einen Kegelstumpf bilden, wie dies in der Zeichnung angedeutet ist. Entlang einer Mantellinie des Kegelstumpfs sind dann z.B. ca. 250 Fasern für den abzubildenden Bereich 34 (Gewinde Innenseite) und ca. 1600 Fasern für den abzubildenden Bereich 35 (Gewinde Aussenseite) vorgesehen. Vor der Kamera 20 kann eine Optik 36 angeordnet sein. Die in Figur 10 nicht dargestellte Leuchtfläche kann - falls vorgesehen - wie bei den vorhergehenden Beispielen ausgestaltet sein. Die Fasern können mit ihrer Lichtaustrittsmündung auch linear angeordnet sein. Als Vorteil ergibt sich ein einfaches, linear abzuarbeitsndes Bild (wie bereits bei den Parabolspiegeln erwähnt). Am Ende jeder Faser kann pro Faser auch eine kleine Linse angebracht sein.

In den gezeigten Beispielen sind jeweils die Leuchtfläche und Spiegel- bzw. Faseranordnungen zusammen dargestellt. Es ist aber zu betonen, dass die Spiegel- bzw. Faseranordnungen auch unabhängig von der Leuchtfläche verwendbar und vorteilhaft sind.

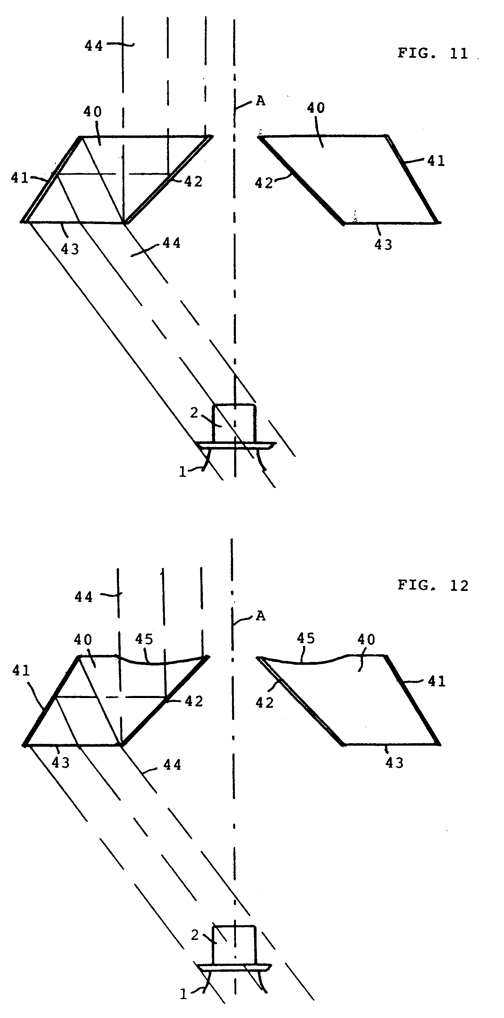

Figur 11 zeigt eine weitere Möglichkeit der Abbildung des Mündungsbereichs 2 einer nur teilweise dargestellten Flasche 1. Dargestellt ist dabei schematisch der Strahlengang 44 von der Flaschenmündung 2 zu einer nicht dargestellten Bildaufnahmeanordnung, z.B. einer Kamera. Nicht dargestellt ist ferner die Beleuchtungseinrichtung, welche aber vorzugsweise mit Durchlicht arbeitet, wie dies vorgängig beschrieben worden ist. Die Abbildung erfolgt hier mittels eines den Strahlengang brechenden Körpers 40, der z.B. aus Glas besteht. In dem gezeigten Beispiel erfolgt eine Brechung des Strahlengangs an der Fläche 43 des Körpers 40 und auch an der oberen Fläche des Körpers, da die Strahlen nicht genau senkrecht verlaufen, sondern auf die Kamera hin geneigt. Der Körper 40 ist dabei in Figur 11 im Vertikalschnitt gezeigt und ist rotationssymmetrisch um die Achse A. In dem gezeigten Beispiel sind die umlaufenden Seitenflächen 41 und 42 des Körpers 40 als Spiegel ausgeführt, so dass sich der dargestellte Strahlengang im Körper 40 ergibt. Der Vorteil einer solchen Anordnung liegt in ihrem robusten Aufbau und im Schutz der Spiegelflächen 41, 42 vor Verschmutzung.

Figur 12 zeigt eine der Variante von Figur 11 ähnliche Ausführung, wobei gleiche Bezugszeichen wie in Figur 11 gleiche Teile bezeichnen. Auch hier ist ein rotationssymmetrischer Brechungskörper 40 vorgesehen, welcher mit Spiegelflächen 41, 42 versehen ist. In dieser Ausführungsform ist eine gekrümmte Fläche 45 an der dem Bildaufnahmegerät zugewandten Seite des Körpers 40 vorgesehen, welche Krümmung eine Korrektur des Astigmatismus ergibt. Auf diese Weise können also Abbildungsfehler korrigiert werden.

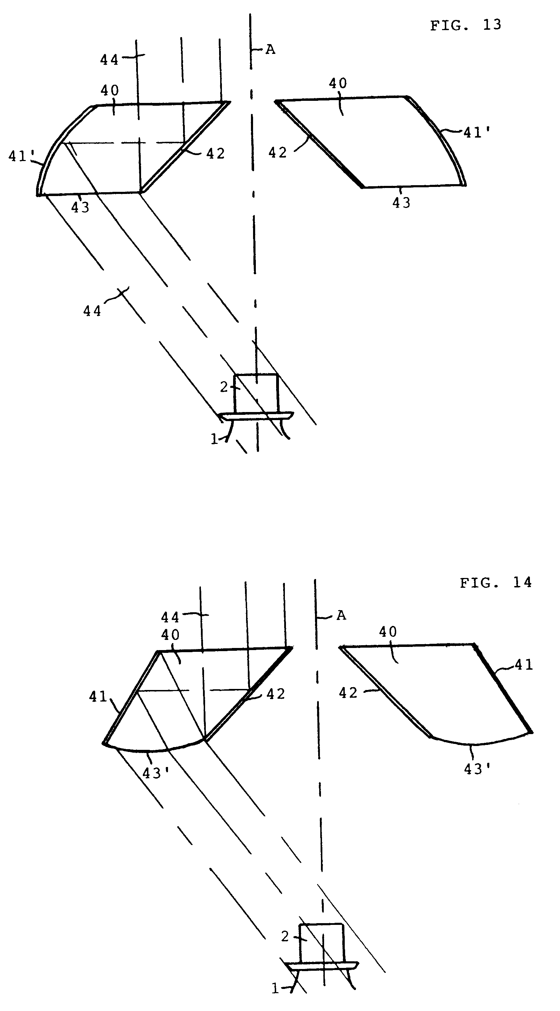

Figur 13 zeigt eine weitere zu Figur 11 ähnliche Variante, wobei auch hier der Körper 40 vorgesehen ist, an dessen Fläche 43 eine Brechung stattfindet. Bei der Variante von Figur 13 ist nun die eine Spiegelfläche 41' gekrümmt, um wiederum eine Korrektur des Strahlengangs bzw. der Abbildung zur Vermeidung von Abbildungsfehlern zu ergeben.

Figur 14 zeigt eine weitere Ausführungsform, worin die brechende Fläche 43' des Körpers 40 gekrümmt ist, um die Korrektur von Abbildungsfehlern zu bewirken. Auch hier sind wieder die Spiegelflächen 41, 42 vorgesehen und der Strahlengang ist mit 44 angedeutet.

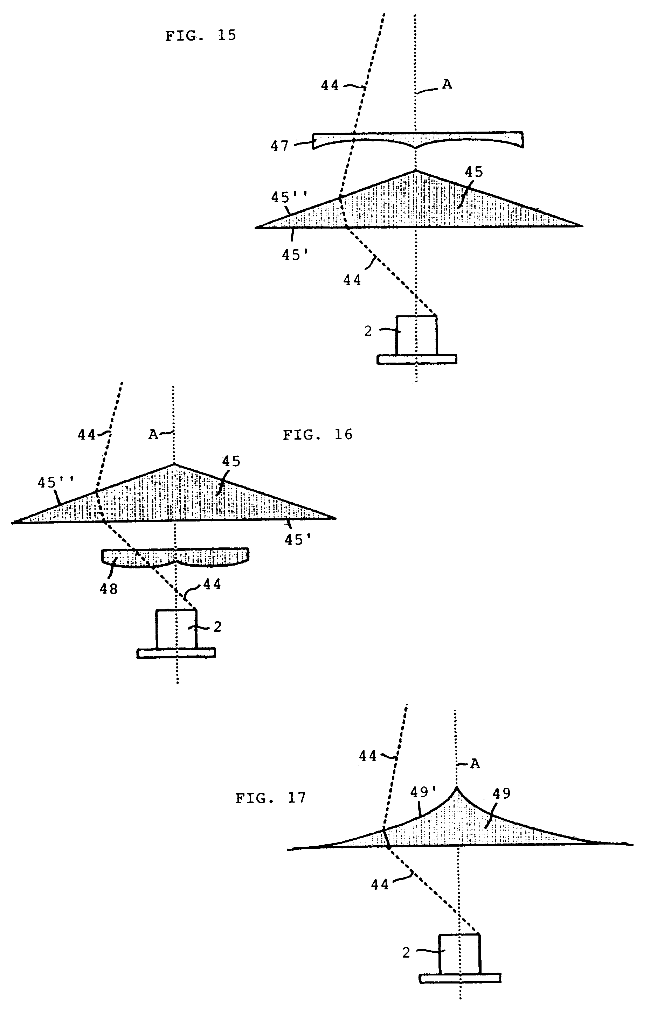

Figur 15 zeigt eine Ausführungsform zur Abbildung des Mündungsbereichs 2 des Behälters, bei welcher ein Prisma 45 verwendet wird. Das Prisma 45 ist im gezeigten Beispiel rotationssymmetrisch zur Achse A und weist somit eine Kegelform auf. Eine Brechung erfolgt an den Flächen 45' und 45'', was den Strahlengang 44 zur nicht dargestellten Kamera hin ergibt. Auch hier ist die Beleuchtungsanordnung zur Beleuchtung des Mündungsbereichs 2 des Behälters nicht dargestellt. Im gezeigten Beispiel von Figur 15 erfolgt die Korrektur von Abbildungsfehlern mittels einer dem Prisma 45 im Strahlengang nachgeschalteten Korrektureinrichtung 47. Auch dieser Aufbau mit einem Prisma 45 ergibt eine einfache und robuste Abbildungsanordnung zur Abbildung des Mündungsbereichs.

Figur 16 zeigt eine Variante der Abbildungsanordnung mit dem Kegelprisma 45 gemäss Figur 15. Dabei bezeichnen gleiche Bezugsziffern gleiche Elemente wie in Figur 15. Die Korrektur von Abbildungsfehlern erfolgt hier mittels einer Optik 48, welche im Strahlengang dem Prisma vorgeschaltet ist.

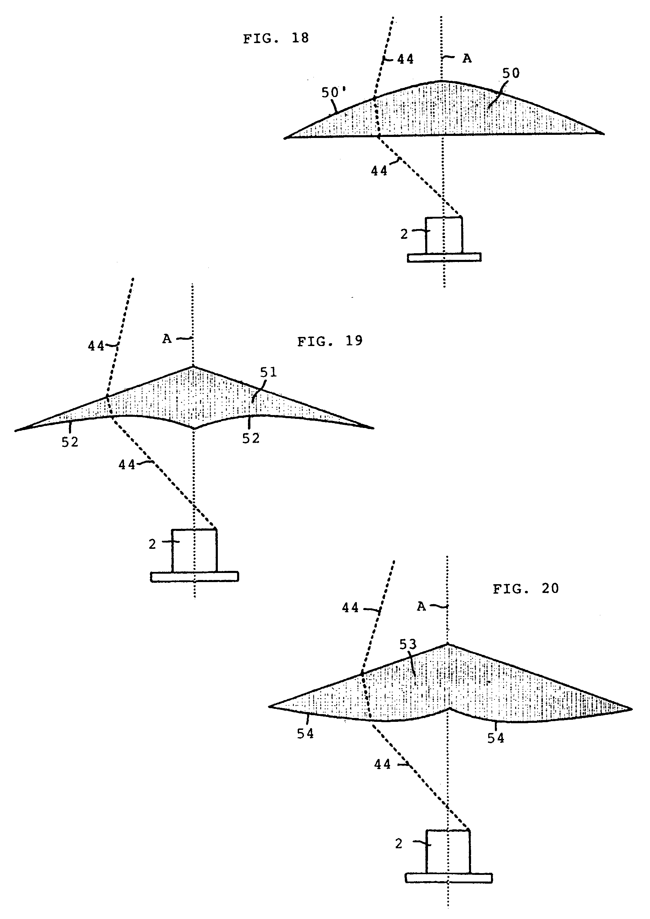

Figur 17 zeigt eine Variante der Abbildung mit einem um die Achse A rotationssymmetrischen Prisma, welches eine gekrümmte Fläche 49' aufweist.

Figur 18 zeigt eine weitere Ausführungsform mit einem Prisma 50, bei welcher eine ebenfalls gekrümmte Fläche 50' zur Korrektur von Abbildungsfehlern vorgesehen ist.

Figur 19 zeigt eine weitere Ausführungsform mit einem Prisma 51, welches eine Fläche 52 mit Krümmung zur Korrektur von Abbildungsfehlern aufweist.

Dies gilt auch für die Ausführungsform gemäss Figur 20, bei welcher das Prisma 53 eine gekrümmte Fläche 54 aufweist, welche ebenfalls Abbildungsfehler durch das Prisma korrigiert.

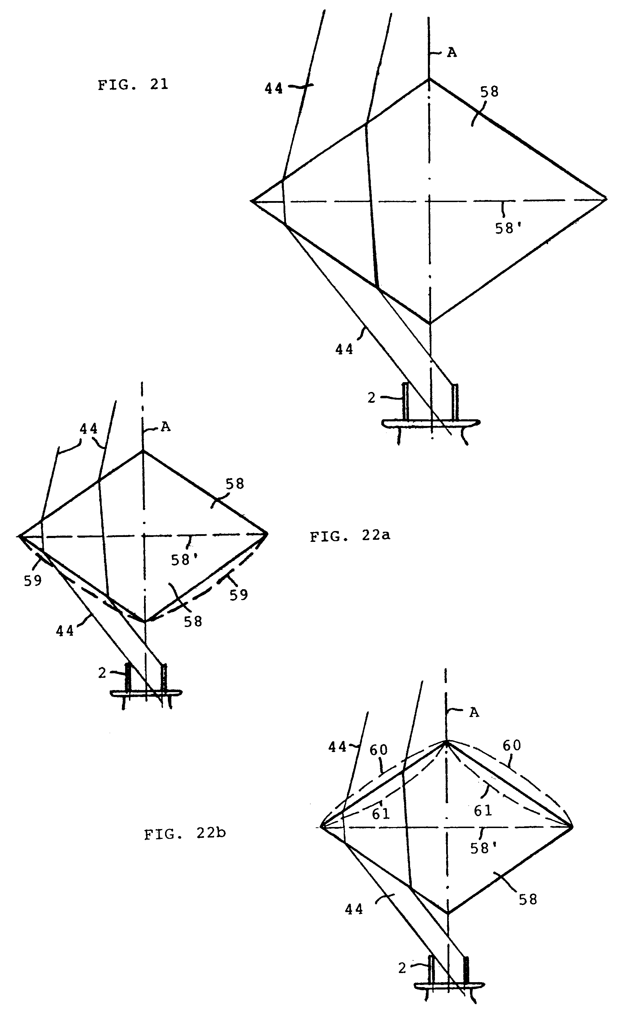

Figur 21 zeigt ein Prisma 58, welches rotationssymmetrisch zur Achse A ausgebildet ist. Dieses Prisma kann aus einem oder aus zwei Teilen aufgebaut sein, wobei die zweiteilige Ausführung in der Figur durch die Trennungslinie 58' angedeutet ist.

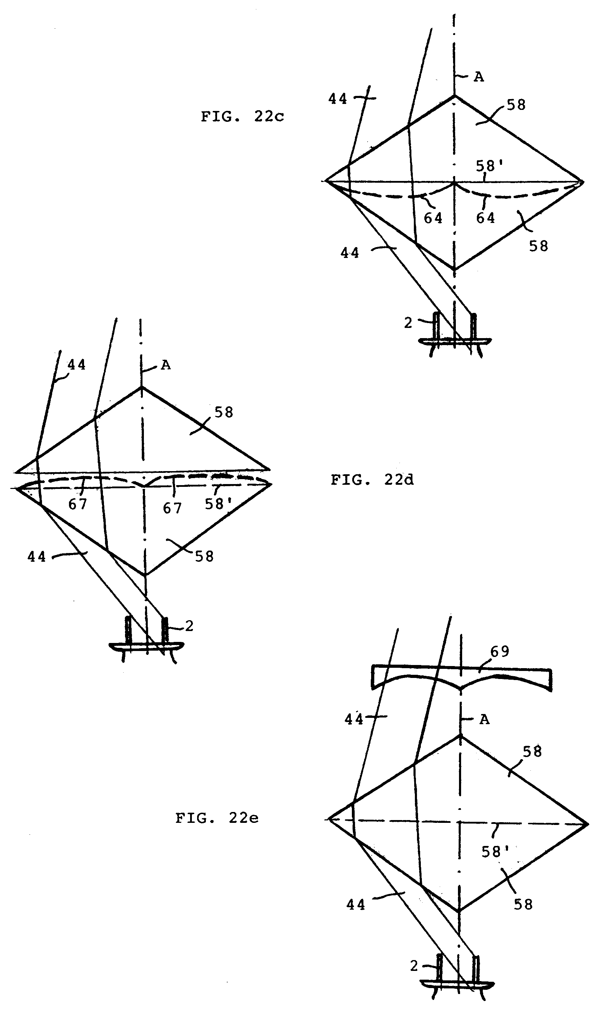

Die Figuren 22a - 22d zeigen verschiedene Ausführungsformen des Prismas 58 mit gekrümmten Flächen zur Korrektur von Abbildungsfehlern. So ist in Figur 22a eine gekrümmte Fläche 59 vorgesehen, welche zur Flasche hin eine Krümmung aufweist. In Figur 22b sind als zwei Ausführungsvarianten die gekrümmten Flächen 60 bzw. 61 dargestellt. In Figur 22c ist ein Prisma 58 gezeigt, welches eine innere gekrümmte Fläche 64 aufweist. Dieses Prisma wird vorzugsweise aus zwei Teilen aufgebaut, wie mit der Trennungslinie 58' dargestellt. Figur 22d zeigt ebenfalls ein Prisma 58 mit einer inneren gekrümmten Fläche 67, wobei auch hier der Aufbau des Prismas vorzugsweise aus zwei Stücken erfolgt.

Figur 22e schliesslich zeigt eine Anordnung zur Abbildung des Mündungsbereichs 2, bei welchem dem Prisma 58 eine Korrekturanordnung 69 nachgeschaltet ist, welche die Abbildungsfehler durch das Prisma korrigiert.

Die gezeigten Beispiele betreffen die Mündungsinspektion von Flaschen. Es ist aber ohne weiteres ersichtlich, dass die Erfindung auch für die Prüfung von anderen Arten von Behältern und anderen Behälterteilen angewandt werden kann, wobei die Durchlichtbetrachtung natürlich mindestens teilweise durchsichtige Behälterbereiche erforderlich macht.

## Patentansprüche

1. Verfahren zur optischen Prüfung eines durchsichtigen Bereiches eines Behälters, insbesondere des Mündungsbereichs einer Flasche, bei welchem eine von mindestens einer Kamera betrachtbare Abbildung des Bereichs erzeugt wird, dadurch gekennzeichnet, dass mindestens eine im wesentlichen homogene Leuchtfläche unterhalb des zu prüfenden Bereiches angeordnet wird, um den Bereich im Durchlicht zu betrachten.

2. Verfahren nach Anspruch 1, dadurch gekennzeichnet, dass die Abbildung mittels einer Spiegelanordnung erzeugt wird.

3. Verfahren nach Anspruch 1 oder 2, dadurch gekennzeichnet, dass die Abbildung durch mindestens einen Brechungskörper, insbesondere ein Prisma, oder durch mindestens einen Brechungskörper in Kombination mit mindestens einem Spiegel erfolgt.

4. Verfahren nach Anspruch 1, dadurch gekennzeichnet, dass die Abbildung mittels lichtleitender Fasern erzeugt wird.

5. Verfahren nach einem der Ansprüche 1 bis 4, dadurch gekennzeichnet, dass jeweils der zu prüfende Behälter unterhalb des Bereichs von einer die Leuchtfläche bildenden Reflexionsfläche umgeben wird, das der Prüfschritt mittels Beleuchtung der Reflexionsfläche und Erfassung des Kamerabildes ausgeführt wird, und dass die Reflexionsfläche vom Behälter entfernt wird.

6. Verfahren nach Anspruch 5, dadurch gekennzeichnet, dass die Reflexionsfläche jeweils aus mindestens zwei Teilen (25a,26a) zusammengefügt wird.

7. Vorrichtung zur Durchführung des Verfahrens nach einem dar Ansprüche 1 bis 6, gekennzeichnet durch eine Beleuchtungseinrichtung (4;4a), eine von dieser beleuchtete Reflexionsfläche, die als im wesentlichen homogene Leuchtfläche (3) unterhalb des zu prüfenden Bereiches (2) angeordnet ist, und eine Spiegelanordnung (5,6,11;18,19,21; 22,23) oder eine Prismaanordnung oder eine Prisma- und Spiegelanordnung oder eine Anordnung lichtleitender Fasern, mittels welcher der Bereich durch eine Kamera betrachtbar ist.

8. Vorrichtung nach Anspruch 7, dadurch gekennzeichnet, dass die Beleuchtungseinrichtung von einer ringförmigen Anordnung (4) von Leuchtdioden gebildet wird.

9. Vorrichtung nach Anspruch 7 oder 8, dadurch gekennzeichnet, dass die Reflexionsfläche von einer gegen die Beleuchtungseinrichtung offenen Kegelinnenfläche gebildet ist.

10. Vorrichtung nach einem der Ansprüche 7 bis 9, dadurch gekennzeichnet, dass dass die Reflexionsfläche zusätzlich zu der als Leuchtfläche (3) dienenden Fläche eine Spiegelfläche (3a;3b) aufweist.

11. Vorrichtung nach einem der Ansprüche 7 bis 10, dadurch gekennzeichnet, dass die Reflexionsfläche mindestens teilweise einen gekrümmten Bereich aufweist.

12. Vorrichtung nach einem der Ansprüche 7 bis 11, dadurch gekennzeichnet, dass die Spiegelanordnung einen Kegelspiegel (11) mit zur Kamera hin weisender äusseren Kegelfläche aufweist.

13. Vorrichtung nach Anspruch 12, dadurch gekennzeichnet, dass der Kegelspiegel von einem Zylinderspiegel (5) umgeben ist, und dass oberhalb des Zylinderspiegels ein Ringspiegel (6) angeordnet ist.

14. Vorrichtung nach Anspruch 12, dadurch gekennzeichnet, dass oberhalb des Kegelspiegels (11) ein weiterer Kegelspiegel (13) angeordnet ist.

15. Vorrichtung nach einem der Ansprüche 7 bis 11, dadurch gekennzeichnet, dass die Spiegelanordnung mindestens einen Parabolspiegel (18,19;22) aufweist.

16. Vorrichtung nach einem der Ansprüche 7 bis 11, dadurch gekennzeichnet, dass die Prisma- und Spiegelanordnung einen rotationssymmetrischen, als Prisma wirkenden Körper (40) aufweist, der mindestens zwei Spiegel (41, 42) aufweist.

17. Vorrichtung nach einem der Ansprüche 7 bis 11, dadurch gekennzeichnet, dass ein einstückiges oder ein aus mehreren Teilen zusammengesetztes Prisma vorgesehen ist.

18. Vorrichtung nach Anspruch 16 oder 17, dadurch gekennzeichnet, dass das Prisma mit mindestens einer Krümmung versehen ist.

19. Vorrichtung nach Anspruch 16 oder 17, dadurch gekennzeichnet, dass vor oder nach dem Prisma eine Korrekturanordnung vorgesehen ist.

20. Vorrichtung nach einem der Ansprüche 7 bis 19 zur Durchführung des Verfahrens nach Anspruch 5, gekennzeichnet durch eine Förderanlage (29,30) zur stehenden Behälterförderung, eine Einrichtung zur Heranbringung und Entfernung der Leuchtfläche sowie eine Prüfeinrichtung mit mindestens einer Kamera zur Aufnahme des von der Leuchtfläche beleuchteten Behälterbereichs.

21. Vorrichtung nach Anspruch 20, dadurch gekennzeichnet, dass die Einrichtung zur Heranbringung und Entfernung der Leuchtfläche zwei im Takt mit der Förderanlage umlaufende Kreisscheiben umfasst, welche jeweils Leuchtflächensegmente tragen, die im Bereich der Prüfeinrichtung zur Leuchtfläche vereinigt werden.

22. Verfahren zur optischen Prüfung eines durchsichtigen Bereiches eines Behälters, insbesondere des Mündungsbereiches einer Flasche, bei welchem eine von mindestens einer Kamera betrachtbare Abbildung des Bereichs erzeugt wird, dadurch gekennzeichnet, dass die Abbildung mittels Spiegeln derart erzeugt wird, dass der Strahlengang vor der letzten Spiegelung zur Kamera hin jeweils schiefwinklig zur Behälterlängsachse verläuft.

23. Spiegelanordnung zur Durchführung des Verfahrens nach Anspruch 22, dadurch gekennzeichnet, dass die Spiegelanordnung einen Kegelspiegel (11) mit zur Kamera hin weisender äusseren Kegelfläche aufweist, welcher von einem Zylinderspiegel (5) und einem oberhalb des Zylinderspiegels angeordneten Ringspiegel (6) umgeben ist.

24. Spiegelanordnung zur Durchführung des Verfahrens nach Anspruch 22, dadurch gekennzeichnet, dass die Spiegelanordnung einen Kegelspiegel (11) mit zur Kamera hin weisender äusseren Kegelfläche und einen kegelstumpfförmigen Spiegel (13) aufweist, dessen Basis oberhalb der Kegelspitze des Kegelspiegels (11) liegt.

25. Spiegelanordnung zur Durchführung des Verfahrens nach Anspruch 22, dadurch gekennzeichnet, dass die Spiegelanordnung mindestens einen Parabolspiegel (18, 22,29) oder einen sphärischen Spiegel umfasst.

26. Verfahren zur optischen Prüfung eines durchsichtigen Bereiches eines Behälters, insbesondere des Mündungsbereiches einer Flasche, bei welchem eine von mindestens einer lichtempfindlichen Anordnung, insbesondere einer Kamera, betrachtbare Abbildung des Bereichs erzeugt wird, dadurch gekennzeichnet, dass die Abbildung mittels einer Faseroptik erzeugt wird.

27. Faseroptikanordnung zur Durchführung des Verfahrens nach Anspruch 26, dadurch gekennzeichnet, dass die Fasermündungen vor der Kamera rotationssymmetrisch angeordnet sind.

28. Faseroptikanordnung zur Durchführung des Verfahrens nach Anspruch 26, dadurch gekennzeichnet, dass die Fasermündungen vor der Kamera oder einer optischen Abtastanordnung linear angeordnet sind.

29. Verfahren zur optischen Prüfung eines durchsichtigen Bereichs eines Behälters, insbesondere des Mündungsbereichs einer Flasche, bei welchem eine von mindestens einer Kamera betrachtbare Abbildung des Bereichs erzeugt wird, dadurch gekennzeichnet, dass der Strahlengang durch einen die Strahlen brechenden Körper hindurch verläuft, insbesondere durch ein Prisma.

30. Anordnung zur Durchführung des Verfahrens nach Anspruch 29, dadurch gekennzeichnet, dass der Körper ringförmig ist und mindestens eine spiegelnde Seitenwand aufweist.

31. Anordnung zur Durchführung des Verfahrens nach Anspruch 29, dadurch gekennzeichnet, dass der Körper ein einstückiges oder ein aus mehreren Teilen zusammengesetztes Prisma ist.

32. Anordnung nach Anspruch 30 oder 31, dadurch gekennzeichnet, dass der Körper mit mindestens einer Krümmung versehen ist, oder dass vor oder nach dem Körper eine Korrektureinrichtung für den Strahlengang vorgesehen ist.
